# EUROPEAN PATENT SPECIFICATION

(11) **EP 4 289 669 B1**
(45) Date of publication and mention of the grant of the patent: **08.04.2026**
(21) Application number: 21923668.4
(22) Date of filing: 02.02.2021
(51) Int. Cl.: B62D 25/02, B62D 65/02, B60Q 1/26

(54) **SIDE PANEL REAR LIGHT MOUNTING STRUCTURE AND MOUNTING METHOD, AUTOMOBILE REAR LIGHT, AND AUTOMOBILE**
STRUKTUR ZUR MONTAGE EINER HINTEREN KRAFTFAHRZEUGLEUCHTE UND MONTAGEVERFAHREN, HINTERE KRAFTFAHRZEUGLEUCHTE UND KRAFTFAHRZEUG
STRUCTURE DE MONTAGE ET PROCÉDÉ DE MONTAGE DE FEU ARRIÈRE DE PANNEAU LATÉRAL, FEU ARRIÈRE DE VÉHICULE AUTOMOBILE ET VÉHICULE AUTOMOBILE

(43) Date of publication of application: 13.12.2023
(73) Proprietor: Zhejiang Smart Intelligence Technology Co., Ltd., Ningbo, Zhejiang 315336 (CN)
(72) Inventor: JIANG, Hailin, Hangzhou Bay New District Ningbo, Zhejiang 315336 (CN); FU, Qiang, Hangzhou Bay New District Ningbo, Zhejiang 315336 (CN); SONG, Yongle, Hangzhou Bay New District Ningbo, Zhejiang 315336 (CN); CHEN, Xiaolei, Hangzhou Bay New District Ningbo, Zhejiang 315336 (CN)
(74) Representative: Zaboliene, Reda
(86) International application number: PCT/CN2021/074892
(87) International publication number: WO 2022/165639

(56) References cited:
- CN-A- 110 466 423
- CN-U- 201 472 237
- CN-U- 203 186 204
- CN-U- 203 793 202
- CN-U- 203 920 559
- CN-U- 205 113 126
- CN-U- 207 345 663
- CN-U- 207 345 663
- US-A- 6 074 080

## Description

### CROSS REFERENCE TO RELATED APPLICATION

The present application is the national phase entry of International Patent Application No. PCT/CN2021/074892, filed on February 2, 2021.

### BACKGROUND OF THE APPLICATION

### Field of the Application

The present application relates to the technical field of automotive component technology, in particular to a side wall taillight mounting structure, a mounting method, an automotive taillight, and an automobile.

### Description of Related Art

With the rapid development of automobiles, the performance and quality of automobile taillights have been important guarantees, and the novel and unique appearance design will become one of the focuses of consumer attention. In order to make the taillights look more technological and unique, increasing the luminous area as much as possible on the same size taillights is an effective way. While maintaining the same exterior contour, increasing the proportion of luminous area to have a larger internal structural size of the taillights requires more internal structural space and larger mounting space. As the main load-bearing component of automobile taillights, the taillight mounting plate provides positioning and mounting holes for the taillights, and its structure and accuracy are crucial for appearance matching, directly affecting the coordination between the taillights and surrounding components.

In order to maximize the luminous area of the taillights, it is necessary to minimize the area of the non-luminous area as much as possible, and make the luminous plate as close to the boundary of the taillights as possible. However, this will increase the space of the taillight housing. In order to provide sufficient mounting space for the taillights, reducing the flange angle of the side wall outer panel is the only solution. However, the main technical issues with reducing the flange angle of the side wall outer panel are as follows:
1) As the flange angle of the side wall outer panel decreases, the operating space for the welding gun also decreases, making it difficult to complete the welding between the side wall outer panel and the taillight mounting plate through spot welding;
2) If advanced welding processes such as laser welding are used to replace spot welding processes, high equipment investment and higher part accuracy requirements are required, and production efficiency is low;
3) The small flange angle of the side wall outer panel results in a negative angle in the stamping direction of the taillight mounting plate in the area L1, making it difficult for stamping and molding.

Therefore, it is necessary to provide a taillight mounting structure that can install high luminous ratio taillights and is easy to manufacture, so as to solve the above technical problems.

For example, the patent document CN207345663U discloses a taillight mounting structure, wherein the taillight mounting structure includes a side outer panel and a taillight mounting plate. The side outer panel is provided with a taillight mounting hole for installing the taillight mounting plate. The taillight mounting hole includes a pointed corner formed by two sides and a transition fillet. The taillight mounting hole is provided with taillight connection plates that are integrally connected to the two sides, respectively. The taillight connection plates are recessed inward relative to the side outer panel, and the taillight connection plates are spaced apart from the transition fillet to form a gap between the two sides. The taillight mounting plate includes a sealing plate for blocking the gap.

### BRIEF SUMMARY OF THE APPLICATION

In order to solve the above technical problems, the present application provides a side wall taillight mounting structure, solving the problem that in existing technology, in order to maximize the luminous area of the taillight, negative angle exists in the stamping direction of the taillight mounting plate, which leads to difficulty in forming and easy cracking.

The technical effects of the present application are achieved through the following:
A side wall taillight mounting structure includes a side wall outer plate and a taillight mounting plate assembly. The taillight mounting plate assembly is welded to the side wall outer plate. The taillight mounting plate assembly includes a taillight mounting connecting plate, an upper taillight mounting plate and a lower taillight mounting plate. The lower taillight mounting plate includes a first welding edge and a second welding edge. The first welding edge is adjacent to the second welding edge. The taillight mounting connecting plate is welded to the first welding edge. The upper taillight mounting plate is welded to the second welding edge. The taillight mounting connecting plate and the upper taillight mounting plate are each welded to the side wall outer plate. The taillight mounting plate assembly is welded through three parts: the taillight mounting connecting plate, the upper taillight mounting plate and the lower taillight mounting plate, which improves the accuracy of each part and solves the problem of negative angle in the stamping direction of the taillight mounting plate, which leads to difficulty in forming and easy cracking.

Further, the side wall outer plate is provided with a flange, and the angle formed by the flange and the side wall outer plate is a flange angle; when the flange angle is less than or equal to a preset angle, the upper taillight mounting plate is welded to the side wall outer plate by cold arc welding; when the flange angle is greater than the preset angle, the upper taillight mounting plate is welded to the side wall outer plate by spot welding.

Further, the upper taillight mounting plate is provided with a first overlapping edge, the first overlapping edge is matched with the taillight mounting connecting plate, and the taillight mounting connecting plate is overlapped on the first overlapping edge.

Further, there is a gap between the taillight mounting connecting plate and the first overlapping edge.

Further, the lower taillight mounting plate is further provided with a second overlapping edge, the second overlapping edge is matched with the taillight mounting connecting plate, and the taillight mounting connecting plate is overlapped on the second overlapping edge.

Further, there is a gap between the taillight mounting connecting plate and the second overlapping edge. The gaps between the taillight mounting connecting plate and the first or second overlapping edge can provide adjustment for the taillight mounting connecting plate when welding the taillight mounting plate assembly, thereby ensuring the accuracy of the mounting holes in the final welding assembly.

Further, the side wall outer plate is provided with a welding surface, and the taillight mounting connecting plate is welded to the welding surface.

Further, the welding surface is formed by folding the side wall outer plate. By adopting a flange structure of the side wall outer panel to achieve the welding surface for welding with the taillight mounting connecting plate, which is conducive to the forming of the side wall outer panel, solving the problem of difficult forming of the side wall outer panel in this area, and solving the problems of poor matching between the taillight and the vehicle body in this area and inconvenient mounting.

Further, the side wall taillight mounting structure further includes a rear water channel, and the rear water channel is fixedly connected to the side wall outer plate.

Further, the taillight mounting connecting plate is provided with a first taillight mounting hole, the lower taillight mounting plate is further provided with a second taillight mounting hole and a third taillight mounting hole; the first taillight mounting hole, the second taillight mounting hole and the third taillight mounting hole are used for installing the taillights of an automobile. By using the first taillight mounting hole as the positioning hole for welding the taillight mounting connecting plate, and by using the second taillight mounting hole and the third taillight mounting hole as the positioning holes for welding the lower taillight mounting plate, the positioning holes for welding the taillight mounting plate assembly and the taillight mounting holes are unified, thereby ensuring the accuracy of the taillight mounting holes to the greatest extent.

Further, the lower taillight mounting plate further includes a first rear bumper mounting surface and a second rear bumper mounting surface; the first rear bumper mounting surface and the second rear bumper mounting surface are used for installing the rear bumper of an automobile.

In addition, a method for mounting taillights using the above mounting structure is further provided, wherein the method includes:
welding the upper taillight mounting plate to the second welding edge of the lower taillight mounting plate to form a whole taillight mounting plate;
welding one end of the upper taillight mounting plate of the whole taillight mounting plate to the side wall outer plate;
welding one end of the lower taillight mounting plate of the whole taillight mounting plate to the side wall outer plate;
wherein the upper taillight mounting plate is provided with a first overlapping edge, the first overlapping edge is matched with the taillight mounting connecting plate, and the taillight mounting connecting plate is overlapped on the first overlapping edge;
wherein the lower taillight mounting plate is provided with a second overlapping edge, the second overlapping edge is matched with the taillight mounting connecting plate, and the taillight mounting connecting plate is overlapped on the second overlapping edge;
adjusting the taillight mounting connecting plate to overlap on the first overlapping edge and the second overlapping edge, welding one end of the taillight mounting connecting plate to the side wall outer plate, and welding the other end of the taillight mounting connecting plate to the first welding edge of the lower taillight mounting plate to complete the fixed connection between the taillight mounting plate assembly and the side wall outer plate.

In addition, an automobile taillight is further provided, which includes a taillight cover, a non-luminous area, a luminous plate, a taillight rear housing, and the side wall taillight mounting structure as described above, wherein the taillight rear housing is installed on the side wall taillight mounting structure, the taillight cover is installed on the taillight rear housing, a non-luminous area and a luminous plate are provided inside the taillight cover.

In addition, an automobile is further provided, which includes the automobile taillight as described above.

As mentioned above, the present application has the following beneficial effects:
1) The taillight mounting plate assembly is welded through three parts: the taillight mounting connecting plate, the upper taillight mounting plate and the lower taillight mounting plate, which improves the accuracy of each part and solves the problem of negative angle in the stamping direction of the taillight mounting plate, which leads to difficulty in forming and easy cracking.
2) By overlapping the taillight mounting connecting plate on the first overlapping edge and the second overlapping edge in non-contact state, it is possible to provide adjustment for the taillight mounting connecting plate when welding the taillight mounting plate assembly, thereby ensuring the accuracy of the mounting holes in the final welding assembly.
3) By adopting a flange structure of the side wall outer panel to achieve the welding surface for welding with the taillight mounting connecting plate, which is conducive to the forming of the side wall outer panel, solving the problem of difficult forming of the side wall outer panel in this area, and solving the problems of poor matching between the taillight and the vehicle body in this area and inconvenient mounting.
4) In areas where spot welding cannot be used, the use of cold arc welding process ensures a good match between the upper taillight mounting plate and the side wall outer plate.
5) By using the first taillight mounting hole as the positioning hole for welding the taillight mounting connecting plate, and by using the second taillight mounting hole and the third taillight mounting hole as the positioning holes for welding the lower taillight mounting plate, the positioning holes for welding the taillight mounting plate assembly and the taillight mounting holes are unified, thereby ensuring the accuracy of the taillight mounting holes to the greatest extent.

### BRIEF DESCRIPTION OF THE DRAWINGS

In order to more clearly illustrate the technical solutions of the present application, the drawings used below for the description of the embodiments or the prior art will be introduced briefly. It is obvious that the accompanying drawings in the following description are only some embodiments of the present application. For those skilled in the art, other drawings can be obtained based on these drawings without creative work.
FIG. 1 is a schematic diagram of the side wall taillight mounting structure in the embodiment of the present application;
FIG. 2 is a side view of the side wall taillight mounting structure in the embodiment of the present application;
FIG. 3 is an exploded view of the side wall taillight mounting structure in the embodiment of the present application;
FIG. 4 is a partially assembled diagram of the side wall taillight mounting structure in the embodiment of the present application;
FIG. 5 is a schematic diagram of the structure of the automotive taillight in the embodiment of the present application.

The reference signs in the drawings are as follows:

| | | | |
|---|---|---|---|
| side wall outer panel | 1 | welding surface | 11 |
| flange | 12 | taillight mounting plate assembly | 2 |
| taillight mounting connecting plate | 21 | first taillight mounting hole | 211 |
| upper taillight mounting plate | 22 | first overlapping edge | 221 |
| lower taillight mounting plate | 23 | first welding edge | 231 |
| second welding edge | 232 | second overlapping edge | 233 |
| second taillight mounting hole | 234 | third taillight mounting hole | 235 |
| first rear bumper mounting surface | 236 | second rear bumper mounting surface | 237 |
| rear water channel | 3 | taillight cover | 4 |
| non-luminous area | 5 | luminous plate | 6 |
| taillight rear housing | 7 | first welding point | P1 |
| second welding point | P2 | third welding point | P3 |
| fourth welding point | P4 | fifth welding point | P5 |
| sixth welding point | P6 | seventh welding point | P7 |
| welding gun operating space | S1 | first area | L1 |
| flange angle | α | | |

### DETAILED DESCRIPTION OF THE APPLICATION

The following will provide a clear and complete description of the technical solution in the embodiments of the present application in conjunction with the accompanying drawings. Obviously, the described embodiments are only part of the embodiments of the present application, not all of the embodiments. Based on the embodiments in the present application, all other embodiments obtained by those skilled in the art without creative work shall fall within the scope of protection of the present application as defined by the appended claims.

### First embodiment

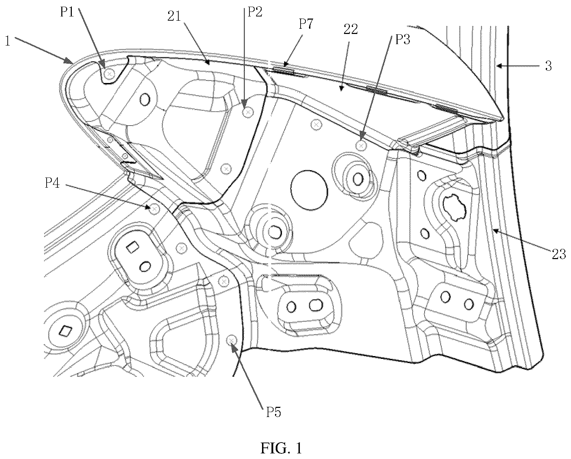

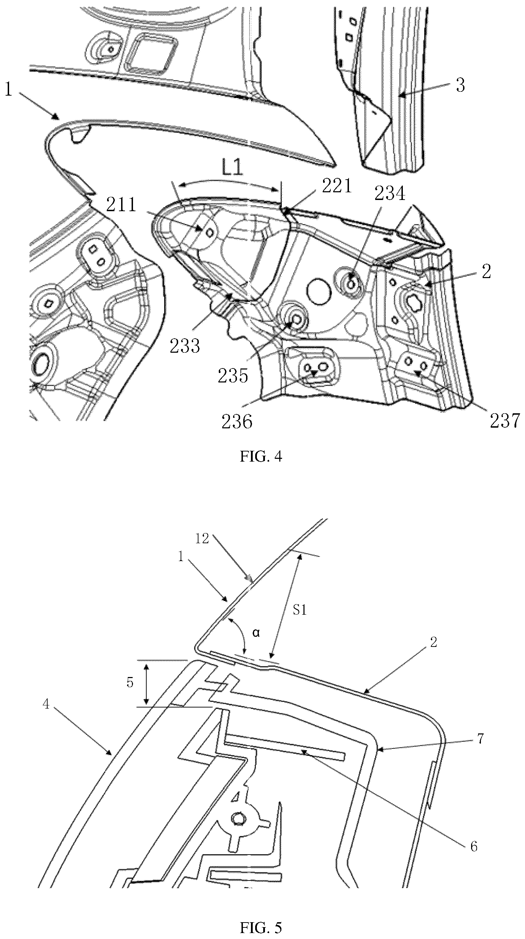

Referring to FIGs. 1-4, this embodiment provides a side wall taillight mounting structure, which includes a side wall outer plate 1 and a taillight mounting plate assembly 2. The side wall outer plate 1 and the taillight mounting plate assembly 2 are fixedly connected by welding. The taillight mounting plate assembly 2 includes a taillight mounting connecting plate 21, an upper taillight mounting plate 22, and a lower taillight mounting plate 23. The lower taillight mounting plate 23 includes a first welding edge 231 and a second welding edge 232, and the first welding edge 231 is adjacent to the second welding edge 232. The taillight mounting connecting plate 21 is welded to the first welding edge 231. The upper taillight mounting plate 22 is welded to the second welding edge 232. The taillight mounting connecting plate 21 and the upper taillight mounting plate 22 are each welded to the side wall outer plate 1. The taillight mounting plate assembly 2 is divided into three parts: the taillight mounting connecting plate 21, the upper taillight mounting plate 22 and the lower taillight mounting plate 23, which is conducive to the forming of the various parts, improving the accuracy of each part, and solving the problem of negative angle in the stamping direction of the taillight mounting plate, which leads to difficulty in forming and easy cracking. It is noted that the split processing to solve the cracking of the taillight mounting plate is not limited to the vertical split described in the present application, but can also be carried out in other directions such as horizontal split.

In this embodiment, the side wall outer plate 1 is further provided with a flange 12, and the angle formed by the flange 12 and the side wall outer plate 1 is a flange angle. The flange angle is α. When the flange angle α is less than or equal to a preset angle, the upper taillight mounting plate 22 is welded to the side wall outer plate 1 by cold arc welding. When the flange angle α is greater than the preset angle, the upper taillight mounting plate 22 is welded to the side wall outer plate 1 by spot welding. Specifically, the preset angle is 60-65 degrees. The flange angle α is in the range of 60≤α<90 degrees, preferably 60≤α<70 degrees, further preferably 60 degrees. In order to provide as much mounting space for the taillights as possible, the flange angle α is reduced to the limit of about 60°. After the flange angle α is reduced, the operating space for the welding gun cannot meet the welding gun operation. In this embodiment, cold arc welding is used instead of spot welding, and the upper taillight mounting plate 22 is welded to the side wall outer plate 1 using cold arc welding, thereby solving the problem that ordinary spot welding process cannot perform welding, and avoiding the problem of high cost equipment investment and low production efficiency caused by laser welding.

In this embodiment, the upper taillight mounting plate 22 is provided with a first overlapping edge 221, and the first overlapping edge 221 is matched with the taillight mounting connecting plate 21. The taillight mounting connecting plate 21 is overlapped on the first overlapping edge 221. The taillight mounting connecting plate 21 is matched with the overlapping edge of the upper taillight mounting plate 22, and the corresponding two overlapping matching surfaces are in a non-contact state, with a gap of about 1.5 mm. The lower taillight mounting plate 23 is provided with a second overlapping edge 233. The second overlapping edge 233 is matched with the taillight mounting connecting plate 21. The taillight mounting connecting plate 21 is overlapped on the second overlapping edge 233. The taillight mounting connecting plate 21 is matched with the overlapping edge of the lower taillight mounting plate 23, and the corresponding two overlapping matching surfaces are in a non-contact state, with a gap of about 1.5 mm. The purpose of designing the gaps is to provide adjustment for the taillight mounting connecting plate 21 when welding the taillight mounting plate assembly 2, to ensure the accuracy of the mounting holes in the final welding assembly.

In this embodiment, the side wall outer plate 1 is provided with a welding surface 11. The welding surface 11 is welded to the taillight mounting connecting plate 21. The welding surface 11 is formed by folding the side wall outer plate 1. In FIG. 1, the first welding point P1 is the welding point between the welding surface 11 and the taillight mounting connecting plate 21. In order to achieve the first welding point P1, the existing technology involves drawing the side wall outer panel to form a pit shaped structure as the welding surface welding to the taillight mounting connecting plate. At the same time, there is a certain requirement for the depth of drawing the side wall outer plate (usually greater than 8 mm), but due to the shell structure at the sharp corner of the taillight, and this sharp corner is very detrimental to formability, resulting in poor molding accuracy and low consistency in molding depth of the side wall outer panel in this area, making it difficult to control the surface difference between matching surfaces in this area during taillight mounting. This embodiment adopts a flange structure of the side wall outer panel to achieve the welding surface of the side wall outer panel in this area, which is more conducive for the forming of the side wall outer panel, solving the problem of difficult forming of the side wall outer panel in this area, and the consistency of the side wall outer panel is higher, solving the problem of poor matching between the taillight and the vehicle body in this sharp corner area and poor mounting consistency.

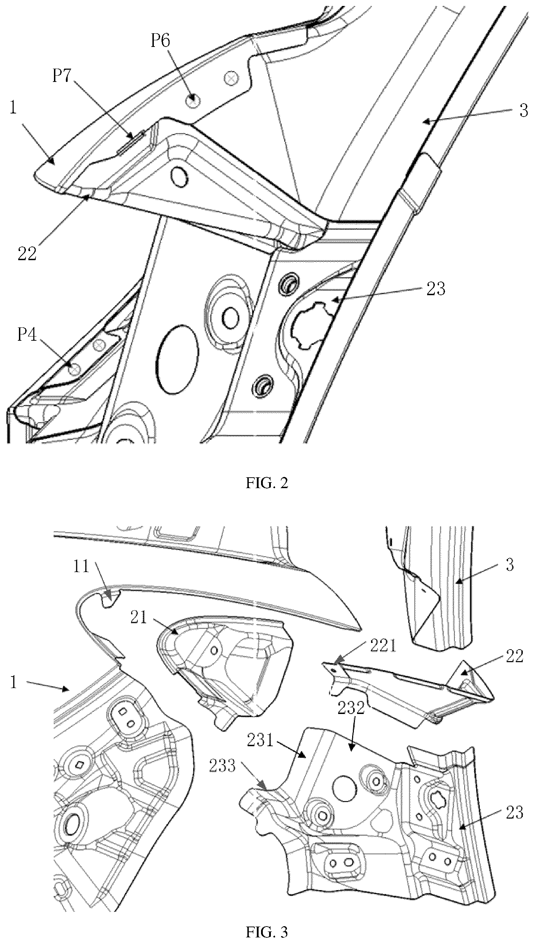

Furthermore, the sixth welding point P6 in FIG. 2 is the welding point between the upper taillight mounting plate 22 and the side wall outer plate 1. To ensure a good match between the taillight mounting plate assembly 2 and the side wall outer plate 1, the first welding point P1 and the sixth welding point P6 control the dimensional accuracy of the connecting end between the taillight mounting plate assembly 2 and the side wall outer plate 1, and it should make these two welding points as close as possible to the edge of the connecting end of the side wall outer plate 1.

In this embodiment, the side wall taillight mounting structure further includes a rear water channel 3. The rear water channel 3 is fixedly connected to the side wall outer plate 1. The taillight mounting connecting plate 21 is provided with a first taillight mounting hole 211. The lower taillight mounting plate 23 is provided with a second taillight mounting hole 234 and a third taillight mounting hole 235. The first taillight mounting hole 211, the second taillight mounting hole 234 and the third taillight mounting hole 235 are used for installing the taillights of an automobile. The lower taillight mounting plate 23 further includes a first rear bumper mounting surface 236 and a second rear bumper mounting surface 237. The first rear bumper mounting surface 236 and the second rear bumper mounting surface 237 are used for installing the rear bumper of an automobile. By using the first taillight mounting hole 211 as the positioning hole for welding the taillight mounting connecting plate 21, and by using the second taillight mounting hole 234 and the third taillight mounting hole 235 as the positioning holes for welding the lower taillight mounting plate 23, the positioning holes for welding the taillight mounting plate assembly 2 and the taillight mounting holes are unified, ensuring the accuracy of the taillight mounting holes to the greatest extent.

The assembly process is as follows:
1) Welding the upper taillight mounting plate 22 to the second welding edge 232 of the lower taillight mounting plate 23 to form a whole taillight mounting plate. Specifically, the upper taillight mounting plate 22 is spot welded to the second welding edge 232 through the third welding point P3 to form a whole taillight mounting plate, wherein the third welding point P3 is two;
2) Welding one end of the upper taillight mounting plate 22 of the whole taillight mounting plate to the side wall outer plate 1 through the seventh welding point P7 (cold arc welding) and the sixth welding point P6 (spot welding), wherein the seventh welding point P7 is three, and the sixth welding point P6 is two;
3) Welding one end of the lower taillight mounting plate 23 of the whole taillight mounting plate to the side wall outer plate 1 through the fifth welding point P5 (spot welding), wherein the fifth welding point P5 is three;
4) Adjusting the taillight mounting connecting plate 21 to overlap on the first overlapping edge 221 and the second overlapping edge 233, welding one end of the taillight mounting connecting plate 21 to the side wall outer plate 1 through the first welding point P1 and the fourth welding point P4, and welding the other end of the taillight mounting connecting plate 21 to the first welding edge 231 of the lower taillight mounting plate 23 through the second welding point P2, wherein the first welding point P1 is one, the fourth welding point P4 is three, and the second welding point P2 is two;
5) To ensure the accuracy and consistency of the welding of the taillight mounting plate assembly 2 and the side wall outer plate 1, all welding points except for the seventh welding point P7 should use spot welding technology as much as possible. In areas where spot welding cannot be used, cold arc welding should be used, so as to complete the fixed connection between the taillight mounting plate assembly 2 and the side wall outer plate 1.

### Second embodiment

Referring to FIGs. 1-5, this embodiment provides an automobile taillight, which includes a taillight cover 4, a non-luminous area 5, a luminous plate 6, a taillight rear housing 7, and the side wall taillight mounting structure as described in the first embodiment. The taillight rear housing 7 is installed on the side wall taillight mounting structure. The taillight cover 4 is installed on the taillight rear housing 7. A non-luminous area 5 and a luminous plate 6 are provided inside the taillight cover 4. In order to maximize the luminous area of the taillights, shorten the distance of the non-luminous area 5, make the luminous plate 6 close to the boundary of the taillights, increase the space of the taillight rear housing 7, and provide sufficient mounting space for the taillights, the only solution is to reduce the flange angle α of the side wall outer panel 1. However, with the reduction of the flange angle α, the operating space S1 for the welding gun using the spot welding process also reduces, making it difficult to achieve the seventh welding point P7. The operating space S1 for the welding gun is the distance from the seventh welding point P7 to the flange 12 of the side wall outer plate 1 along the vertical direction. Typically, the minimum operating space S1 for the welding gun is about 52 mm. By reducing the flange angle α, the value of the operating space S1 for the welding gun becomes far less than 52 mm, making it impossible to use ordinary spot welding process. In addition, the traditional taillight mounting plates have negative angle in the first area L1 along the stamping direction, making the stamping and forming difficult. The present application reduces the flange angle α of the side wall outer panel 1 to the limit, about 60°, and uses cold arc welding to replace spot welding, solving the problem that ordinary spot welding cannot be used for welding. Further, the traditional taillight mounting plate is divided into multiple smaller parts, which are then connected to form the taillight mounting plate assembly 2 through spot welding, solving the problem of difficult forming and easy cracking of the traditional taillight mounting plate due to negative angle.

As mentioned above, the present application has the following beneficial effects:
1) The taillight mounting plate assembly 2 is welded through three parts: the taillight mounting connecting plate 21, the upper taillight mounting plate 22 and the lower taillight mounting plate 23, which improves the accuracy of each part and solves the problem of negative angle in the stamping direction of the taillight mounting plate, which leads to difficulty in forming and easy cracking.
2) By overlapping the taillight mounting connecting plate 21 on the first overlapping edge 221 and the second overlapping edge 233 in non-contact state, it is possible to provide adjustment for the taillight mounting connecting plate 21 when welding the taillight mounting plate assembly 2, thereby ensuring the accuracy of the mounting holes in the final welding assembly.
3) By adopting a flange structure of the side wall outer panel to achieve the welding surface for welding with the taillight mounting connecting plate 21, which is conducive to the forming of the side wall outer panel 1, solving the problem of difficult forming of the side wall outer panel 1 in this area, and solving the problems of poor matching between the taillight and the vehicle body in this area and inconvenient mounting.
4) In areas where spot welding cannot be used, the use of cold arc welding process ensures a good match between the upper taillight mounting plate 22 and the side wall outer plate 1.
5) By using the first taillight mounting hole 211 as the positioning hole for welding the taillight mounting connecting plate 21, and by using the second taillight mounting hole 234 and the third taillight mounting hole 235 as the positioning holes for welding the lower taillight mounting plate 23, the positioning holes for welding the taillight mounting plate assembly 2 and the taillight mounting holes are unified, thereby ensuring the accuracy of the taillight mounting holes to the greatest extent.

In this description, the terms "front", "back", "up", "down", etc. are defined based on the positions of the elements in the drawings and between them, merely for the clarity and convenience of expressing the technical solution. It should be understood that the use of the directional words should not limit the scope of protection of the present application.

In this description, the above embodiments and the features in the embodiments can be combined with each other if no conflict exists.

The above disclosure is only a preferred embodiment of the present application, and of course, it cannot be used to limit the scope of the present application. Therefore, the equivalent changes made according to the claims of the present application still fall within the scope of the present application.

## Claims

1. A side wall taillight mounting structure comprising a side wall outer plate (1) and a taillight mounting plate assembly (2), wherein the taillight mounting plate assembly (2) is welded to the side wall outer plate (1), the taillight mounting plate assembly (2) comprises a taillight mounting connecting plate (21), an upper taillight mounting plate (22) and a lower taillight mounting plate (23), **characterized in that** the lower taillight mounting plate (23) comprises a first welding edge (231) and a second welding edge (232), the first welding edge (231) is adjacent to the second welding edge (232), the taillight mounting connecting plate (21) is welded to the first welding edge (231), the upper taillight mounting plate (22) is welded to the second welding edge (232), the taillight mounting connecting plate (21) and the upper taillight mounting plate (22) are each welded to the side wall outer plate (1).

2. The side wall taillight mounting structure as claimed in claim **1,** wherein the side wall outer plate (1) is provided with a flange (12), and the angle formed by the flange (12) and the side wall outer plate (1) is a flange angle; when the flange angle is less than or equal to a preset angle, the upper taillight mounting plate (22) is welded to the side wall outer plate (1) by cold arc welding; when the flange angle is greater than the preset angle, the upper taillight mounting plate (22) is welded to the side wall outer plate (1) by spot welding.

3. The side wall taillight mounting structure as claimed in claim **1,** wherein the upper taillight mounting plate (22) is provided with a first overlapping edge (221), the first overlapping edge (221) is matched with the taillight mounting connecting plate (21), and the taillight mounting connecting plate (21) is overlapped on the first overlapping edge (221).

4. The side wall taillight mounting structure as claimed in claim **3,** wherein there is a gap between the taillight mounting connecting plate (21) and the first overlapping edge (221).

5. The side wall taillight mounting structure as claimed in claim **3,** wherein the lower taillight mounting plate (23) is further provided with a second overlapping edge (233), the second overlapping edge (233) is matched with the taillight mounting connecting plate (21), and the taillight mounting connecting plate (21) is overlapped on the second overlapping edge (233).

6. The side wall taillight mounting structure as claimed in claim **5,** wherein there is a gap between the taillight mounting connecting plate (21) and the second overlapping edge (233).

7. The side wall taillight mounting structure as claimed in claim **1,** wherein the side wall outer plate (1) is provided with a welding surface (11), and the taillight mounting connecting plate (21) is welded to the welding surface (11).

8. The side wall taillight mounting structure as claimed in claim **1,** further comprising a rear water channel (3), wherein the rear water channel (3) is fixedly connected to the side wall outer plate (1).

9. The side wall taillight mounting structure as claimed in claim **1,** wherein the taillight mounting connecting plate (21) is provided with a first taillight mounting hole (211), the lower taillight mounting plate (23) is further provided with a second taillight mounting hole (234) and a third taillight mounting hole (235); the first taillight mounting hole (211), the second taillight mounting hole (234) and the third taillight mounting hole (235) are used for installing the taillights of an automobile.

10. The side wall taillight mounting structure as claimed in claim **1,** wherein the lower taillight mounting plate (23) further comprises a first rear bumper mounting surface (236) and a second rear bumper mounting surface (237); the first rear bumper mounting surface (236) and the second rear bumper mounting surface (237) are used for installing the rear bumper of an automobile.

11. A method for mounting taillights using the mounting structure as claimed in any one of claims **1** to **10,** wherein the method comprises:
welding the upper taillight mounting plate (22) to the second welding edge (232) of the lower taillight mounting plate (23) to form a whole taillight mounting plate;
welding one end of the upper taillight mounting plate (22) of the whole taillight mounting plate to the side wall outer plate (1);
welding one end of the lower taillight mounting plate (23) of the whole taillight mounting plate to the side wall outer plate (1);
wherein the upper taillight mounting plate (22) is provided with a first overlapping edge (221), the first overlapping edge (221) is matched with the taillight mounting connecting plate (21), and the taillight mounting connecting plate (21) is overlapped on the first overlapping edge (221);
wherein the lower taillight mounting plate (23) is provided with a second overlapping edge (233), the second overlapping edge (233) is matched with the taillight mounting connecting plate (21), and the taillight mounting connecting plate (21) is overlapped on the second overlapping edge (233);
adjusting the taillight mounting connecting plate (21) to overlap on the first overlapping edge (221) and the second overlapping edge (233), welding one end of the taillight mounting connecting plate (21) to the side wall outer plate (1), and welding the other end of the taillight mounting connecting plate (21) to the first welding edge (231) of the lower taillight mounting plate (23) to complete the fixed connection between the taillight mounting plate assembly (2) and the side wall outer plate (1).

12. An automobile taillight comprising a taillight cover (4), a non-luminous area (5), a luminous plate (6), a taillight rear housing (7), and the side wall taillight mounting structure as claimed in any one of claims **1** to **10,** wherein the taillight rear housing (7) is installed on the side wall taillight mounting structure, the taillight cover (4) is installed on the taillight rear housing (7), a non-luminous area (5) and a luminous plate (6) are provided inside the taillight cover (4).

13. An automobile comprising the automobile taillight as claimed in claim **12.**

## Patentansprüche

1. Seitenwand-Rückleuchtenmontagestruktur, umfassend eine äußere Seitenwandplatte (1) und eine Rückleuchtenmontageplattenanordnung (2), wobei die Rückleuchtenmontageplattenanordnung (2) mit der äußeren Seitenwandplatte (1) verschweißt ist, wobei die Rückleuchtenmontageplattenanordnung (2) eine Rückleuchtenmontageverbindungsplatte (21), eine obere Rückleuchtenmontageplatte (22) und eine untere Rückleuchtenmontageplatte (23) umfasst, **dadurch gekennzeichnet, dass** die untere Rückleuchtenmontageplatte (23) eine erste Schweißkante (231) und eine zweite Schweißkante (232) umfasst, wobei die erste Schweißkante (231) an der zweiten Schweißkante (232) anliegt, wobei die Rückleuchtenmontageverbindungsplatte (21) mit der ersten Schweißkante (231) verschweißt ist, wobei die obere Rückleuchtenmontageplatte (22) mit der zweiten Schweißkante (232) verschweißt ist und die Rückleuchtenmontageverbindungsplatte (21) sowie die obere Rückleuchtenmontageplatte (22) jeweils mit der äußeren Seitenwandplatte (1) verschweißt sind.

2. Seitenwand-Rückleuchtenmontagestruktur nach Anspruch **1,** wobei die äußere Seitenwandplatte (1) mit einem Flansch (12) versehen ist und der von dem Flansch (12) und der äußeren Seitenwandplatte (1) gebildete Winkel ein Flanschwinkel ist, wobei wenn der Flanschwinkel kleiner oder gleich einem vorgegebenen Winkel ist, die obere Rückleuchtenmontageplatte (22) mittels Kaltlichtbogenschweißen an die äußere Seitenwandplatte (1) geschweißt wird, wobei wenn der Flanschwinkel größer als der vorgegebene Winkel ist, die obere Rückleuchtenmontageplatte (22) mittels Punktschweißen an die äußere Seitenwandplatte (1) geschweißt wird.

3. Seitenwand-Rückleuchtenmontagestruktur nach Anspruch **1,** wobei die obere Rückleuchtenmontageplatte (22) mit einer ersten Überlappkante (221) versehen ist, wobei die erste Überlappkante (221) zu der Rückleuchtenmontageverbindungsplatte (21) passt und die Rückleuchtenmontageverbindungsplatte (21) auf der ersten Überlappkante (221) überlappt ist.

4. Seitenwand-Rückleuchtenmontagestruktur nach Anspruch **3,** wobei zwischen der Rückleuchtenmontageverbindungsplatte (21) und der ersten Überlappkante (221) ein Spalt vorhanden ist.

5. Seitenwand-Rückleuchtenmontagestruktur nach Anspruch **3,** wobei die untere Rückleuchtenmontageplatte (23) ferner mit einer zweiten Überlappkante (233) versehen ist, wobei die zweite Überlappkante (233) zu der Rückleuchtenmontageverbindungsplatte (21) passt und die Rückleuchtenmontageverbindungsplatte (21) auf der zweiten Überlappkante (233) überlappt ist.

6. Seitenwand-Rückleuchtenmontagestruktur nach Anspruch **5,** wobei zwischen der Rückleuchtenmontageverbindungsplatte (21) und der zweiten Überlappkante (233) ein Spalt vorhanden ist.

7. Seitenwand-Rückleuchtenmontagestruktur nach Anspruch 1, wobei die äußere Seitenwandplatte (1) mit einer Schweißfläche (11) versehen ist und die Rückleuchtenmontageverbindungsplatte (21) mit der Schweißfläche (11) verschweißt ist.

8. Seitenwand-Rückleuchtenmontagestruktur nach Anspruch **1,** weiterhin umfassend einen hinteren Wasserkanal (3), wobei der hintere Wasserkanal (3) fest mit der äußeren Seitenwandplatte (1) verbunden ist.

9. Seitenwand-Rückleuchtenmontagestruktur nach Anspruch 1, wobei die Rückleuchtenmontageverbindungsplatte (21) mit einer ersten Rückleuchtenmontageöffnung (211) versehen ist, wobei die untere Rückleuchtenmontageplatte (23) ferner mit einer zweiten Rückleuchtenmontageöffnung (234) und einer dritten Rückleuchtenmontageöffnung (235) versehen ist, wobei die erste Rückleuchtenmontageöffnung (211), die zweite Rückleuchtenmontageöffnung (234) und die dritte Rückleuchtenmontageöffnung (235) zum Installieren der Rückleuchten eines Kraftfahrzeugs dienen.

10. Seitenwand-Rückleuchtenmontagestruktur nach Anspruch **1,** wobei die untere Rückleuchtenmontageplatte (23) ferner eine erste hintere Stoßfängermontagefläche (236) und eine zweite hintere Stoßfängermontagefläche (237) umfasst, wobei die erste hintere Stoßfängermontagefläche (236) und die zweite hintere Stoßfängermontagefläche (237) zum Installieren des hinteren Stoßfängers eines Kraftfahrzeugs dienen.

11. Verfahren zum Montieren von Rückleuchten unter Verwendung der Montagestruktur nach einem der Ansprüche **1** bis **10** , wobei das Verfahren Folgendes umfasst:
Schweißen der oberen Rückleuchtenmontageplatte (22) an die zweite Schweißkante (232) der unteren Rückleuchtenmontageplatte (23), um eine vollständige Rückleuchtenmontageplatte zu bilden;
Schweißen eines Endes der oberen Rückleuchtenmontageplatte (22) der vollständigen Rückleuchtenmontageplatte an die äußere Seitenwandplatte (1);
Schweißen eines Endes der unteren Rückleuchtenmontageplatte (23) der vollständigen Rückleuchtenmontageplatte an die äußere Seitenwandplatte (1);
wobei die obere Rückleuchtenmontageplatte (22) mit einer ersten Überlappkante (221) versehen ist, wobei die erste Überlappkante (221) zu der Rückleuchtenmontageverbindungsplatte (21) passt und die Rückleuchtenmontageverbindungsplatte (21) auf der ersten Überlappkante (221) überlappt ist;
wobei die untere Rückleuchtenmontageplatte (23) ferner mit einer zweiten Überlappkante (233) versehen ist, wobei die zweite Überlappkante (233) zu der Rückleuchtenmontageverbindungsplatte (21) passt und die Rückleuchtenmontageverbindungsplatte (21) auf der zweiten Überlappkante (233) überlappt ist;
Anpassen der Rückleuchtenmontageverbindungsplatte (21) zum Überlappen auf der ersten Überlappkante (221) und der zweiten Überlappkante (233); Schweißen eines Endes der Rückleuchtenmontageverbindungsplatte (21) an die äußere Seitenwandplatte (1) und Schweißen des anderen Endes der Rückleuchtenmontageverbindungsplatte (21) an die erste Schweißkante (231) der unteren Rückleuchtenmontageplatte (23), um die feste Verbindung zwischen der Rückleuchtenmontageplattenanordnung (2) und der äußeren Seitenwandplatte (1) abzuschließen.

12. Kraftfahrzeug-Rückleuchte, umfassend eine Rückleuchtenabdeckung (4), einen nichtleuchtenden Bereich (5), eine Leuchtplatte (6), ein hinteres Rückleuchtengehäuse (7) und die Seitenwand-Rückleuchtenmontagestruktur nach einem der Ansprüche **1** bis **10,** wobei das hintere Rückleuchtengehäuse (7) auf der Seitenwand-Rückleuchtenmontagestruktur montiert ist, wobei die Rückleuchtenabdeckung (4) auf dem hinteren Rückleuchtengehäuse (7) montiert ist und im Inneren der Rückleuchtenabdeckung (4) ein nicht-leuchtender Bereich (5) sowie eine Leuchtplatte (6) vorgesehen sind.

13. Kraftfahrzeug, umfassend die Kraftfahrzeug-Rückleuchte nach Anspruch **12.**

## Revendications

1. Structure de montage de feu arrière de paroi latérale comprenant une plaque externe de paroi latérale (1) et un ensemble plaque de montage de feu arrière (2), dans laquelle l'ensemble plaque de montage de feu arrière (2) est soudé à la plaque externe de paroi latérale (1), l'ensemble plaque de montage de feu arrière (2) comprend une plaque de liaison de montage de feu arrière (21), une plaque supérieure de montage de feu arrière (22) et une plaque inférieure de montage de feu arrière (23), **caractérisée en ce que** la plaque inférieure de montage de feu arrière (23) comprend un premier bord de soudage (231) et un second bord de soudage (232), le premier bord de soudage (231) est adjacent au second bord de soudage (232), la plaque de liaison de montage de feu arrière (21) est soudée au premier bord de soudage (231), la plaque supérieure de montage de feu arrière (22) est soudée au second bord de soudage (232), et la plaque de liaison de montage de feu arrière (21) et la plaque supérieure de montage de feu arrière (22) sont chacune soudées à la plaque externe de paroi latérale (1).

2. Structure de montage de feu arrière de paroi latérale selon la revendication **1,** dans laquelle la plaque externe de paroi latérale (1) est pourvue d'un rebord (12), et l'angle formé par le rebord (12) et la plaque externe de paroi latérale (1) est un angle de rebord ; lorsque l'angle de rebord est inférieur ou égal à un angle prédéterminé, la plaque supérieure de montage de feu arrière (22) est soudée à la plaque externe de paroi latérale (1) par soudage à l'arc à froid ; lorsque l'angle de rebord est supérieur à l'angle prédéterminé, la plaque supérieure de montage de feu arrière (22) est soudée à la plaque externe de paroi latérale (1) par soudage par points.

3. Structure de montage de feu arrière de paroi latérale selon la revendication **1,** dans laquelle la plaque supérieure de montage de feu arrière (22) est pourvue d'un premier bord de recouvrement (221), le premier bord de recouvrement (221) est adapté à la plaque de liaison de montage de feu arrière (21), et la plaque de liaison de montage de feu arrière (21) recouvre le premier bord de recouvrement (221).

4. Structure de montage de feu arrière de paroi latérale selon la revendication **3,** dans laquelle il existe un espace entre la plaque de liaison de montage de feu arrière (21) et le premier bord de recouvrement (221).

5. Structure de montage de feu arrière de paroi latérale selon la revendication **3,** dans laquelle la plaque inférieure de montage de feu arrière (23) est en outre pourvue d'un second bord de recouvrement (233), le second bord de recouvrement (233) est adapté à la plaque de liaison de montage de feu arrière (21), et la plaque de liaison de montage de feu arrière (21) recouvre le second bord de recouvrement (233).

6. Structure de montage de feu arrière de paroi latérale selon la revendication **5,** dans laquelle il existe un espace entre la plaque de liaison de montage de feu arrière (21) et le second bord de recouvrement (233).

7. Structure de montage de feu arrière de paroi latérale selon la revendication 1, dans laquelle la plaque externe de paroi latérale (1) est pourvue d'une surface de soudage (11), et la plaque de liaison de montage de feu arrière (21) est soudée à la surface de soudage (11).

8. Structure de montage de feu arrière de paroi latérale selon la revendication **1,** comprenant en outre un canal d'eau arrière (3), dans laquelle le canal d'eau arrière (3) est relié de façon fixe à la plaque externe de paroi latérale (1).

9. Structure de montage de feu arrière de paroi latérale selon la revendication 1, dans laquelle la plaque de liaison de montage de feu arrière (21) est pourvue d'un premier trou de montage de feu arrière (211), la plaque inférieure de montage de feu arrière (23) est en outre pourvue d'un deuxième trou de montage de feu arrière (234) et d'un troisième trou de montage de feu arrière (235) ; le premier trou de montage de feu arrière (211), le deuxième trou de montage de feu arrière (234) et le troisième trou de montage de feu arrière (235) sont utilisés pour l'installation des feux arrière d'une automobile.

10. Structure de montage de feu arrière de paroi latérale selon la revendication **1,** dans laquelle la plaque inférieure de montage de feu arrière (23) comprend en outre une première surface de montage de pare-chocs arrière (236) et une seconde surface de montage de pare-chocs arrière (237) ; la première surface de montage de pare-chocs arrière (236) et la seconde surface de montage de pare-chocs arrière (237) sont utilisées pour l'installation du pare-chocs arrière d'une automobile.

11. Procédé de montage de feux arrière à l'aide de la structure de montage selon l'une quelconque des revendications **1** à **10,** dans lequel le procédé comprend :
le soudage de la plaque supérieure de montage de feu arrière (22) au second bord de soudage (232) de la plaque inférieure de montage de feu arrière (23) afin de former une plaque de montage de feu arrière complète ;
le soudage d'une extrémité de la plaque supérieure de montage de feu arrière (22) de la plaque de montage de feu arrière complète à la plaque externe de paroi latérale (1) ;
le soudage d'une extrémité de la plaque inférieure de montage de feu arrière (23) de la plaque de montage de feu arrière complète à la plaque externe de paroi latérale (1) ;
dans lequel la plaque supérieure de montage de feu arrière (22) est pourvue d'un premier bord de recouvrement (221), le premier bord de recouvrement (221) est adapté à la plaque de liaison de montage de feu arrière (21), et la plaque de liaison de montage de feu arrière (21) recouvre le premier bord de recouvrement (221) ;
dans lequel la plaque inférieure de montage de feu arrière (23) est pourvue d'un second bord de recouvrement (233), le second bord de recouvrement (233) est adapté à la plaque de liaison de montage de feu arrière (21), et la plaque de liaison de montage de feu arrière (21) recouvre le second bord de recouvrement (233) ;
l'ajustement de la plaque de liaison de montage de feu arrière (21) pour qu'elle recouvre le premier bord de recouvrement (221) et le second bord de recouvrement (233), le soudage d'une extrémité de la plaque de liaison de montage de feu arrière (21) à la plaque externe de paroi latérale (1), et le soudage de l'autre extrémité de la plaque de liaison de montage de feu arrière (21) au premier bord de soudage (231) de la plaque inférieure de montage de feu arrière (23) afin de compléter la liaison fixe entre l'ensemble plaque de montage de feu arrière (2) et la plaque externe de paroi latérale (1).

12. Feu arrière d'automobile comprenant un cache de feu arrière (4), une zone non lumineuse (5), une plaque lumineuse (6), un boîtier arrière de feu arrière (7), et la structure de montage de feu arrière de paroi latérale selon l'une quelconque des revendications **1** à **10,** dans lequel le boîtier arrière de feu arrière (7) est installé sur la structure de montage de feu arrière de paroi latérale, le cache de feu arrière (4) est installé sur le boîtier arrière de feu arrière (7), une zone non lumineuse (5) et une plaque lumineuse (6) sont prévues à l'intérieur du cache de feu arrière (4).

13. Automobile comprenant le feu arrière d'automobile selon la revendication **12.**
